# EUROPÄISCHE PATENTSCHRIFT

(11) **EP 3 941 701 B1**
(45) Veröffentlichungstag und Bekanntmachung des Hinweises auf die Patenterteilung: **24.07.2024**
(21) Anmeldenummer: 20723262.0
(22) Anmeldetag: 18.03.2020
(51) Int. Cl.: B29B 7/42, B29B 7/60, B29B 7/66, B29B 7/88, B29C 48/505, B29C 48/60, B29C 48/275

(54) **SCHNECKE MIT HINTERSCHNITTENEM STEG FÜR EINEN EXTRUDER ODER FÖRDERER**
SCREW WITH UNDERCUT WEB FOR AN EXTRUDER OR CONVEYOR
VIS SANS FIN AVEC PARTIE COUPÉE À L'ARRIÈRE POUR EXTRUDEUSE OU TRANSPORTEUR

(30) Priorität: 20.03.2019 AT 502432019
(43) Veröffentlichungstag der Anmeldung: 26.01.2022
(73) Patentinhaber: EREMA Engineering Recycling Maschinen und Anlagen Gesellschaft m.b.H., 4052 Ansfelden (AT)
(72) Erfinder: AIGNER, Michael, 4060 Leonding (AT); WEIGERSTORFER, Georg, 4030 Linz/Ebelsberg (AT); FREILINGER, Herbert, 4616 Weisskirchen an der Traun (AT); FEICHTINGER, Klaus, 4040 Linz (AT)
(74) Vertreter: Wildhack & Jellinek Patentanwälte
(86) Internationale Anmeldenummer: PCT/AT2020/060100
(87) Internationale Veröffentlichungsnummer: WO 2020/186281

(56) Entgegenhaltungen:
- EP-A1- 2 689 908
- EP-A2- 0 487 076
- DD-A1- 68 377
- DE-A1- 10 300 009
- JP-A- 2003 145 533
- JP-A- 2009 045 745
- JP-A- H08 103 926

## Beschreibung

Die Erfindung betrifft eine Schnecke für einen Extruder oder Förderer gemäß dem Oberbegriff des Anspruchs 1, einen Extruder oder Förderer mit zumindest einer derartigen Schnecke, sowie in weiterer Folge auch eine Vorrichtung zum Behandeln, insbesondere Recyceln, von Kunststoffmaterialien umfassend einen solchen Extruder.

Schnecken für Förderer oder Extruder sind in vielfältigen Ausgestaltungen und Variationen für zahlreiche Einsatzzwecke bekannt. Je nach Einsatzgebiet und Anforderung unterscheiden sich die Schneckengeometrien, neben ihrer Länge und dem Schneckendurchmesser, beispielsweise in ihrer Gangsteigung und Gangbreite, in der Gangtiefe, dem Gangsteigungswinkel oder der Anzahl der Schneckengänge.

Bei der Aufbereitung bzw. dem Recyceln von thermoplastischen und teilthermoplastischen Polymeren aus den unterschiedlichsten Bereichen besteht eine Hauptaufgabe darin, diese Materialien, beispielsweise Halbfertig- oder Fertigprodukte, die aus dem industriellen Kreislauf aber auch aus dem Consumer-Kreislauf stammen können, so in ihrer Form und Ihren Eigenschaften zu verändern, dass damit ein Extrusionsvorgang entsprechend stabil läuft, um schlussendlich qualitativ hochwertige Rezyklate herzustellen.

Gerade im Bereich des Polymer-Recyclings gibt es eine Vielzahl an hierfür speziellen Schnecken und Extrudern, die mit Polymermaterialien gefüttert werden, diese plastifizieren und aufschmelzen und schlussendlich in Granulate überführen.

Oftmals werden vor das Extrusionssystem Vorrichtungen zur Vorbehandlung der zu bearbeitenden Materialien geschaltet, beispielsweise bekannte Schneidverdichter bzw. Preconditioning Units (PCU), wobei es sich zumeist um direkt an den Extruder angekoppelte Behälter mit umlaufenden Werkzeugen handelt. Diesem, dem Extrusionsprozess vorgelagerten, Aufbereitungsschritt kommt dabei unter anderem auch die Aufgabe zu, die Form und Eigenschaften der Polymermaterialien entsprechend zu verändern, diese gegebenenfalls zu zerkleinern, und deren Schüttdichte zu erhöhen. Solche Kombinationsvorrichtungen sind seit langem bekannt, beispielsweise aus der EP 2 558 263 oder der EP 2 689 908.

Dabei wird durch die im Behälter umlaufenden Misch- und Zerkleinerungswerkzeuge auch der Befüllungs- bzw. Beschickungsvorgang des an den Behälter angeschlossenen Extruder bzw. Förderer unterstützt. Sowohl der Fördervorgang aber auch der Extrusionsvorgang ist in der Regel dann besonders effizient, wenn der Befüllungsgrad der Schnecke gleichbleibend und ausreichend hoch ist. Der Bereich der Beschickung des Förderers bzw. Extruders ist also sensibel und hat maßgeblichen Miteinfluss auf das zu erreichende Endergebnis bzw. die Qualität der Rezyklate. In diesem Zusammenhang spielen beispielsweise der Abstand der Misch- und Zerkleinerungswerkzeuge zur Extruderschnecke, die Form und Größe der Beschickungsöffnung, die Drehrichtung der Mischwerkzeuge im Verhältnis zur Förderrichtung des Extruders eine Rolle, allerdings auch auf Seiten des Extruders bzw. Förderers unter anderem das Profil des Schneckensteges, die Form des Schneckengrundes bzw. die freie offene Fläche des Schneckenganges. Bei ungünstigen Einzugsgeometrien kann es beispielsweise zu einem Pumpen des Volumendurchsatzes kommen, d.h. zu einer Veränderung des Durchsatzes über die Zeit, wobei dies für einen verlässlichen Betrieb und für die Qualität der Rezyklate nachteilig ist.

Es hat daher im Stand der Technik nicht an Versuchen gefehlt, den Bereich der Beschickung des Förderers bzw. Extruders konstruktiv anzupassen bzw. so zu gestalten, dass das Einzugsverhalten und die Befütterung der Schnecke bestmöglich unterstützt werden und beispielsweise auch toleranter gegen betriebsbedingte Materialunterschiede wird.

Aus dem Stand der Technik, u.a. aus der DD68377, der DE10300009, der EP0487076, der JP2009045745 (siehe hierzu auch die JP-S 5784830 A) oder der JP2003145533, sind weiters Vorrichtungen mit hinterschnittenen Förderflanken bekannt.

Es ist somit Aufgabe der vorliegenden Erfindung das Befütterungsverhalten einer Schnecke und insbesondere sowohl den Durchsatz als auch gleichzeitig die Durchsatzkonstanz zu verbessern.

Diese Aufgabe wird durch die kennzeichnenden Merkmale des Anspruchs 1 gelöst. Dabei ist vorgesehen, dass der Steg der Schnecke an seiner vorderen aktiven Förderflanke in Förderrichtung der Schnecke bzw. des Extruders gesehen hinterschnitten ausgebildet ist. Diese hinterschnittene Ausgestaltung muss nicht notwendigerweise über die gesamte Schneckenlänge bzw. den gesamten Steg vorliegen, sondern ist zumindest in einem bestimmten Abschnitt bzw. Teilbereich der Schnecke ausgebildet.

Es hat sich in diesem Zusammenhang überraschend gezeigt, dass die Ausgestaltung des Profils des Schneckensteges durch die Ausbildung der Hinterschneidung Vorteile beim Einzugsverhalten bietet und eine effektive Befüllung des Extruders bewirkt.

Die derart nach vorne gekrümmten aktiven Förderflanken beaufschlagen die sich im Einzugsbereich befindlichen Materialien aufgrund ihrer speziellen Geometrie mit Kräften, die anders gerichtet sind als beispielsweise Kräfte, die durch nicht hinterschnittene Förderflanken ausgeübt werden. Die hinterschnittene Förderflanke ist besonders dann von Vorteil, wenn teils erweichte und teils noch feste Stoffe in die Schnecke eingebracht werden. Dies wirkt sich besonders vorteilhaft bei leichten Stoffen wie beispielsweise geschäumten Materialien oder bei Materialien mit geringer Schüttdichte aus, wobei gerade hier das etwas aggressivere Verhalten der hinterschnittenen Förderflanken Vorteile bieten.

Grundsätzlich sind die erwähnten Effekte nicht nur bei komprimierenden Schnecken für Extruder bzw. Agglomeratoren relevant, sondern auch bei nicht oder weniger komprimierenden Förderschnecken.

Unter dem Begriff Förderer werden vorliegend sowohl Anlagen mit nicht komprimierenden oder dekomprimierenden Schnecken, also reine Förderschnecken, als auch Anlagen mit komprimierenden Schnecken, also Extruderschnecken mit agglomerierender oder plastifizierender Wirkung, verstanden.

Unter den Begriffen Extruder bzw. Extruderschnecke werden in vorliegendem Text sowohl Extruder bzw. Schnecken verstanden, mit denen das Material vollständig oder teilweise aufgeschmolzen wird, als auch Extruder, mit denen das erweichte Material nur agglomeriert, jedoch nicht aufgeschmolzen wird. Bei Agglomerierschnecken wird das Material nur kurzzeitig stark komprimiert und geschert, nicht aber plastifiziert. Die Agglomerierschnecke liefert daher an ihrem Ausgang Material, welches nicht vollkommen geschmolzen ist, sondern von nur an ihrer Oberfläche angeschmolzenen Teilchen besteht, die gleichsam einer Sinterung zusammengebackt sind. In beiden Fällen wird jedoch über die Schnecke Druck auf das Material ausgeübt und dieses verdichtet.

Unter dem Begriff "Hinterschneidung" bzw. "hinterschnitten" wird vorliegend verstanden, dass die vordere aktive Förderflanke des Stegs in Richtung der designierten Bewegung des Materials im Betrieb, also in Förderrichtung, geneigt oder gekrümmt ausgebildet ist.

Dadurch bildet sich bei der aktiven Förderflanke ein hinterschnittener Bereich aus, bei dem die in Förderrichtung gesehene vordere Kante des Steges den vordersten Bereich des Steges definiert und die aktive Förderflanke ausgehend von dieser vordersten Kante in Richtung zum Kern entgegen der Förderrichtung nach hinten versetzt verläuft.

In diesem Zusammenhang ist es vorteilhaft, wenn die Hinterschneidung mit einem Hinterschneidungswinkel ausgebildet ist, der gemessen ist in einem Scheitel auf der in Förderrichtung vordersten Kante des Stegs, in einer Normalschnittebene normal zum Steg, und zwar zwischen einer Umhüllenden der Schnecke und einer Tangente an die aktive Förderflanke, wobei der Hinterschneidungswinkel im Bereich von 30° ≤ w2 ≤ 90° liegt. Die Umhüllende der Schnecke wird durch die äußeren Stegflächen bzw. die vordersten Kanten des Stegs gebildet. Es hat sich hier überraschend gezeigt, dass bereits bei einem relativ geringen Ausmaß der Hinterschneidung ein Effekt gegenüber nicht hinterschnittenen Schneckenstegen erzielen lässt.

In diesem Zusammenhang ist es besonders vorteilhaft, wenn der Hinterschneidungswinkel im Bereich von 30° ≤ w2 ≤ 65°, insbesondere im Bereich von 40° ≤ w2 ≤ 50°, vorzugsweise bei ca. 45°, liegt.

Eine konstruktiv vorteilhafte Ausführungsform sieht vor, dass die aktive Förderflanke zumindest in einem Teilbereich bzw. Abschnitt der Schnecke, in einem radial äußeren Abschnitt, insbesondere bis maximal 50 % der aktiven Förderflanke, planeben bzw. in der Normalschnittebene ungekrümmt ausgebildet ist.

Erfindungsgemäss ist vorgesehen, dass die Schnecke, zumindest in einem Abschnitt der Schnecke, eine Einzugstiefe, gemessen zwischen der Umhüllenden und dem Kern im Bereich zwischen zwei benachbarten Stegen, aufweist, für die gilt: 0,03*d ≤ t1 ≤ 0,35*d, insbesondere 0,125*d ≤ t1 ≤ 0,35*d, wobei d der äußere Schneckendurchmesser in diesem Bereich ist. Die besondere Einstellung der Gangtiefe t1 hat sich insbesondere bei zusammenhängenden verklebten Materialien sowie bei sehr leichten Stoffe mit größerem Volumen wie beispielsweise geschäumten Materialien als vorteilhaft erwiesen. Insbesondere ist die Hinterschneidung sowie die Einstellung der Gangtiefe auch dann vorteilhaft, wenn Materialien in den Extruder eindosiert werden, wie beispielsweise bei der Einbringung von verfilzten Naturfasern, insbesondere mit geringer Schüttdichte.

Weiters ist erfindungsgemäss vorgesehen, dass der Kern, zumindest in einem Abschnitt der Schnecke, im Bereich, in dem die aktive Förderflanke in den Kern bzw. Schneckengrund übergeht, eine zusätzliche Vertiefung aufweist, bei der der Kerndurchmesser geringer als in den benachbarten Bereichen ist, wobei für die Zusatztiefe der Vertiefung gilt: 0·t1 < t2 ≤ t1.

Diese zusätzliche Tiefe ergibt ein größeres freies Volumen, das besonders bei Schaumpolymeren eine Verbesserung in Durchsatzkonstanz erbringt.

In diesem Zusammenhang ist es vorteilhaft, wenn die aktive Förderflanke zumindest in einem Abschnitt der Schnecke, im Bereich, in dem die aktive Förderflanke in den Kern übergeht, eine, insbesondere kreisbogenförmige, Krümmung aufweist, die sich zumindest über einen Bereich von > 1 rad erstreckt. Dies führt zu einer größeren Selbstreinigung und zur Vermeidung von Verklebungen gegenüber winkeligen Ausführungen.

Die erfindungsgemäße Konstruktion sieht weiters vor, dass ein der Vertiefung benachbarter, in der Normalschnittebene gerader Kernabschnitt ausgebildet ist, der in einem Winkel im Bereich von 0° < w4 ≤ 45° zur Umhüllenden geneigt ist. Derart gestaltete Übergänge führen zu einer verbesserten Selbstreinigung. Die aktive Flanke hat trotzdem noch eine gewisse Scherung, die die Schnecke reinigt, deshalb können die Radien geringer ausfallen als auf der passiven Seite der Schneckenflanke.

Alternativ und/oder zusätzlich kann vorgesehen sein, dass die äußere Stegfläche des Stegs zumindest in einem Abschnitt der Schnecke, im Bereich anschließend an die vorderste Kante des Stegs, vorzugsweise vollständig bis zur hintersten Kante, in der Normalschnittebene ungekrümmt ausgebildet ist.

Weiters ist es vorteilhaft, wenn die äußere Stegfläche, zumindest in einem Abschnitt der Schnecke, parallel zur Umhüllenden und/oder zur Wandung des Gehäuses eines Extruders ausgerichtet ist.

Eine Verbesserung des Einzugsverhaltens wird weiters bewirkt, wenn die an die äußere Stegfläche anschließende passive Förderflanke des Stegs zumindest in einem Abschnitt der Schnecke, in einem radial äußeren, der äußeren Stegfläche benachbarten Abschnitt, insbesondere bis maximal 70 % der passiven Förderflanke, planeben bzw. in der Normalschnittebene ungekrümmt ausgebildet ist.

Weiters ist es, insbesondere zur besseren Selbstreinigung, vorteilhaft, wenn die passive Förderflanke zumindest in einem Abschnitt der Schnecke, in einem Flankenwinkel im Bereich von 30° ≤ w3 ≤ 90° geneigt ist, gemessen in einem Scheitel auf der in Förderrichtung hintersten Kante des Stegs, in einer Normalschnittebene normal zum Steg, zwischen der Umhüllenden der Schnecke und einer Tangente an die passive Förderflanke.

Die Schnecke kann eingängig oder mehrgängig mit einer Ganganzahl im Bereich von 2 bis 20 sein. Es kann vorgesehen sein, dass für die Gangsteigung der Schnecke gilt: 0,1*d ≤ S ≤ 5*d, wobei d der äußere Schneckendurchmesser ist. Mehrgängige Schnecken tragen beispielsweise zu einer besseren Schneckenführung bei. Speziell, wenn das zu bearbeitende Material stark zusammenhängt und dadurch nicht leicht in die Schnecke eindringt, sind mehr Schabkanten im Sinne von mehr Stegen vorteilhaft um die Schnecke vollständig und gleichmäßig zu füllen.

Weiters kann vorgesehen sein, dass für die Stegbreite bzw. die Breite der äußeren Stegfläche gilt: 0*S ≤ b ≤ 0,5*S, wobei S die Gangsteigung der Schnecke ist.

Besonders vorteilhaft ist es, wenn die Schnecke nur in ihrem anfänglichen, zur Förderrichtung distalen Bereich bzw. im designierten Einzugsbereich eines Extruders oder Förderers, entsprechend hinterschnitten ausgebildet ist, und im übrigen Bereich der Steg keine Hinterschneidung aufweist. Nachdem die hinterschnittene Schneckengeometrie gerade bei der Befüllung der Schnecke vorteilhaft ist, ist die erfindungsgemäße Ausgestaltung der Schnecke in jenem Bereich wichtig, bei dem der Zylinder, der die Schnecke umgibt, offen ist, um beispielsweise Material in die Schnecke einzuspeisen. Die Schnecke muss also nicht notwendigerweise über ihre gesamte Länger gleichartig gestaltet sein und überall die erfindungsgemäße Hinterschneidung aufweisen. Besonders vorteilhaft ist es allerdings, wenn die erfindungsgemäße Ausgestaltung in genau denjenigen Bereichen vorliegt, in denen Material von der Schnecke aufgenommen wird und die Schnecke auf das zugeführte Material einwirken kann.

Erfindungsgemäß ist weiters ein Extruder oder Förderer, insbesondere für Polymere, mit zumindest einer in einem Gehäuse rotierbar angeordneten, insbesondere plastifizierenden oder agglomerierenden, erfindungsgemäßen Schnecke.

In diesem Zusammenhang ist es besonders vorteilhaft, wenn die Schnecke, insbesondere ausschließlich, im Bereich einer Öffnung des Gehäuses des Extruders, insbesondere im Bereich einer Einzugsöffnung bzw. Fütterungsöffnung für das Material, erfindungsgemäß ausgebildet ist. Die spezielle Hinterschneidung und sonstige Ausgestaltung der Schnecke ist also vorteilhafterweise gerade im Bereich der Einzugsöffnung bzw. Fütterungsöffnung des Extruders vorgesehen. Es ist hierbei allerdings nicht relevant, ob diese Fütterungsöffnung im Anfangsbereich des Extruders oder in einem in Förderrichtung weiter stromabwärts liegenden Bereich liegt. Auch ist die Ausgestaltung der Schnecke nicht nur auf eine einzige Öffnung beschränkt und im Extruder können auch mehrere Öffnungen vorgesehen sein, in die Material einspeisbar ist und wo die erfindungsgemäße Ausgestaltung der Schnecke Vorteile beim Einzugsverhalten bewirkt.

Erfindungsgemäß ist weiters eine Vorrichtung zum Behandeln von Kunststoffen, insbesondere von thermoplastischem Abfallkunststoff zu Recyclingzwecken, mit einem Behälter und/oder Schneidverdichter zur Vorbehandlung des zu verarbeitenden Materials, und einem daran, insbesondere tangential, angeschlossenen erfindungsgemäßen Extruder oder Förderer mit einer erfindungsgemäßen Schnecke.

In diesem Zusammenhang ist es besonders vorteilhaft, wenn im Behälter zumindest ein um eine Drehachse drehbares umlaufendes Misch- und/oder Zerkleinerungswerkzeug zur Mischung, Erwärmung und gegebenenfalls Zerkleinerung des Kunststoffmaterials angeordnet ist, wobei in einer Seitenwand des Behälters im Bereich der Höhe des oder des untersten, bodennächsten Misch- und/oder Zerkleinerungswerkzeugs eine Behälteröffnung ausgebildet ist, durch die das vorbehandelte Kunststoffmaterial aus dem Inneren des Behälters ausbringbar ist, wobei zumindest ein erfindungsgemäßer Extruder oder Förderer mit einer erfindungsgemäßen Schnecke zur Aufnahme des im Behälter vorbehandelten Materials vorgesehen ist, wobei das Gehäuse des Extruders eine an seiner Stirnseite oder in seiner Mantelwand liegende Einzugsöffnung für das von der Schnecke zu erfassende Material aufweist, und die Einzugsöffnung mit der Behälteröffnung in Verbindung steht.

Für ein vorteilhaftes Einzugsverhalten ist es unter anderem auch mitbestimmend, wie die Misch- und Zerkleinerungswerkzeuge des Schneidverdichters das vorbehandelte Material in die Einzugsöffnung des Extruders einbringen bzw. diesen Vorgang unterstützen. Dies hängt unter anderem von der Drehrichtung der Schnecke sowie der Drehrichtung der Misch- und Zerkleinerungswerkzeuge ab. In diesem Zusammenhang hat es sich als besonders vorteilhaft erwiesen, wenn im Bereich vor der Behälteröffnung bzw. im Bereich vor der Einzugsöffnung bzw. Fütterungsöffnung des Förderers oder Extruders die Drehrichtung der Misch- und/oder Zerkleinerungswerkzeugs im wesentlichen entgegen der bzw. gegensinnig zur Förderrichtung des Extruders verläuft.

Derartige Anordnungen sind grundsätzlich bereits bekannt, beispielsweise aus der EP 2 558 263 B1 oder EP 2 689 908 B1, haben sich jedoch auch in diesem Zusammenhang mit der erfindungsgemäßen Schneckengeometrie als besonders vorteilhaft erwiesen. Die in der EP 2 558 263 B1 oder EP 2 689 908 B1 beschriebenen Anordnungen werden, ausgestattet mit der erfindungsgemäßen ausgestalteten Schnecke, durch Bezugnahme in die vorliegende Offenbarung aufgenommen.

Dabei ist zunächst vorgesehen, dass die gedachte Verlängerung der zentralen Längsachse des Förderers, insbesondere Extruders, wenn dieser nur eine einzige Schnecke aufweist, oder die Längsachse der der Einzugsöffnung nächstliegenden Schnecke, wenn dieser mehr als eine Schnecke aufweist, entgegen der Förderrichtung des Förderers an der Drehachse ohne diese zu schneiden vorbeiführt, wobei die Längsachse des Förderers, wenn dieser eine einzige Schnecke aufweist, oder die Längsachse der der Einzugsöffnung nächstliegenden Schnecke ablaufseitig zu der zur Längsachse parallelen, von der Drehachse des Misch- und/oder Zerkleinerungswerkzeugs in Förderrichtung des Förderers nach außen gerichteten Radialen des Behälters um einen Abstand versetzt ist. Damit ist die Förderrichtung der Mischwerkzeuge und die Förderrichtung des Förderers nicht mehr, wie aus dem Stand der Technik bekannt, gleichsinnig, sondern zumindest geringfügig gegensinnig, wodurch ein Stopfeffekt verringert wird. Durch die bewusste Umkehrung der Drehrichtung der Misch- und Zerkleinerungswerkzeuge im Vergleich zu früher bekannten Vorrichtungen, nimmt der Beschickungsdruck auf den Einzugsbereich ab und es verringert sich das Risiko einer Überfüllung. Überschüssiges Material wird auf diese Weise nicht mit übermäßigem Druck in den Einzugsbereich des Förderers gestopft bzw. gespachtelt, sondern im Gegenteil wird überschüssiges Material sogar tendenziell wieder von dort entfernt, sodass zwar immer ausreichend Material im Einzugsbereich vorliegt, jedoch nahezu drucklos bzw. nur mit geringem Druck beaufschlagt wird. Auf diese Weise kann die Schnecke ausreichend befüllt werden und immer ausreichend Material einziehen, ohne dass es zu einer Überfüllung der Schnecke und in weiterer Folge zu lokalen Druckspitzen kommt, bei denen das Material aufschmelzen könnte.

Auf diese Weise wird ein Aufschmelzen des Materials im Bereich des Einzugs verhindert, wodurch sich die betriebliche Effizienz erhöht, die Wartungsintervalle verlängern und die Stehzeiten durch allfällige Reparaturen und Säuberungsmaßnahmen verkürzt werden.

Durch die Verringerung des Beschickungsdruckes reagieren Schieber, mit denen der Befüllungsgrad der Schnecke in bekannter Weise reguliert werden kann, deutlich sensibler und der Füllgrad der Schnecke lässt sich noch genauer einstellen. Insbesondere bei schwereren Materialien, wie etwa Mahlgütern aus High-Density Polyethylen (HDPE) oder PET, lässt sich so leichter der optimale Betriebspunkt der Anlage finden.

Außerdem hat es sich als überraschend vorteilhaft erwiesen, dass Materialien, die schon bis nahe an die Schmelze erweicht wurden, besser bei dem erfindungsgemäßen gegenläufigen Betrieb eingezogen werden. Insbesondere dann, wenn das Material schon in teigigem bzw. erweichtem Zustand vorliegt, schneidet die Schnecke das Material aus dem teigigen Ring, der der Behälterwand naheliegt. Bei einer Drehrichtung in Förderrichtung der Schnecke würde dieser Ring eher weitergeschoben werden und es könnte kein Abschaben durch die Schnecke erfolgen, wodurch der Einzug nachlassen würde. Dies wird durch die erfindungsgemäße Umkehr der Drehrichtung vermieden.

Außerdem können bei der Bearbeitung der oben beschriebenen streifigen bzw. faserigen Materialien die gebildeten Verhängungen bzw. Anhäufungen leichter gelöst werden bzw. werden gar nicht erst ausgebildet, da auf der in Drehrichtung der Mischwerkzeuge ablaufseitigen bzw. stromabwärts gelegenen Kante der Öffnung der Richtungsvektor der Mischwerkzeuge und der Richtungsvektor des Förderers in fast entgegengesetzte oder zumindest geringfügig gegensinnige Richtungen zeigen, wodurch sich ein länglicher Streifen nicht um diese Kante biegen und verhängen kann, sondern von der Mischtrombe im Aufnahmebehälter wieder mitgerissen wird.

Insgesamt verbessert sich durch die erfindungsgemäße Ausgestaltung das Einzugsverhalten und vergrößert sich der Durchsatz deutlich. Das Gesamtsystem aus Schneidverdichter und Förderers wird dadurch stabiler und leistungsfähiger.

Gemäß einer vorteilhaften Weiterentwicklung ist vorgesehen, dass der Förderer so am Aufnahmebehälter angeordnet ist, dass das Skalarprodukt aus dem tangential zum Flugkreis des radial äußersten Punktes des Misch- und/oder Zerkleinerungswerkzeugs bzw. zum an der Öffnung vorbeistreichenden Kunststoffmaterial und normal zu einer Radialen des Aufnahmebehälters ausgerichteten, in Dreh- bzw. Bewegungsrichtung des Misch- und/oder Zerkleinerungswerkzeugs weisenden Richtungsvektor (Richtungsvektor der Drehrichtung) und dem Richtungsvektor der Förderrichtung des Förderers in jedem einzelnen Punkt bzw. im gesamten Bereich der Öffnung bzw. in jedem einzelnen Punkt bzw. im gesamten Bereich unmittelbar radial vor der Öffnung, null oder negativ ist. Der Bereich unmittelbar radial vor der Öffnung ist als derjenige Bereich vor der Öffnung definiert, bei dem das Material knapp vor dem Durchtritt durch die Öffnung steht, aber noch nicht die Öffnung passiert hat. Auf diese Weise werden die erwähnten Vorteile erzielt und werden effektiv jegliche durch Stopfeffekte bewirkte Agglomeratbildungen im Bereich der Einzugsöffnung vermieden. Insbesondere kommt es dabei auch nicht auf die räumliche Anordnung der Mischwerkzeuge und der Schnecke zueinander an, beispielsweise muss die Drehachse nicht normal zur Bodenfläche oder zur Längsachse des Förderers bzw. der Schnecke ausgerichtet sein. Der Richtungsvektor der Drehrichtung und der Richtungsvektor der Förderrichtung liegen in einer, vorzugsweise horizontalen, Ebene, bzw. in einer normal zur Drehachse ausgerichteten Ebene.

Eine weitere vorteilhafte Ausgestaltung ergibt sich dadurch, dass der Richtungsvektor der Drehrichtung des Misch- und/oder Zerkleinerungswerkzeugs mit dem Richtungsvektor der Förderrichtung des Förderers einen Winkel von größer oder gleich 90° und kleiner oder gleich 180° einschließt, wobei der Winkel im Schnittpunkt der beiden Richtungsvektoren am stromaufwärts zur Dreh- bzw. Bewegungsrichtung gelegenen Rand der Öffnung gemessen wird, insbesondere im am weitesten stromaufwärts gelegenen Punkt auf diesem Rand bzw. der Öffnung. Dadurch wird derjenige Winkelbereich beschrieben, in dem der Förderer am Aufnahmebehälter angeordnet werden muss, um die vorteilhaften Effekte zu erzielen. Dabei kommt es im gesamten Bereich der Öffnung bzw. in jedem einzelnen Punkt der Öffnung zu einer zumindest geringfügigen gegensinnigen Ausrichtung der auf das Material einwirkenden Kräfte bzw. im Extremfall zu einer druckneutralen Querausrichtung. In keinem Punkt der Öffnung ist das Skalarprodukt der Richtungsvektoren der Mischwerkzeuge und der Schnecke positiv, nicht einmal in einem Teilbereich der Öffnung tritt somit eine zu große Stopfwirkung auf.

Eine weitere vorteilhafte Ausgestaltung der Erfindung sieht vor, dass der Richtungsvektor der Dreh- bzw. Bewegungsrichtung mit dem Richtungsvektor der Förderrichtung einen Winkel zwischen 170° und 180° einschließt, gemessen im Schnittpunkt der beiden Richtungsvektoren in der Mitte der Öffnung. Eine solche Anordnung trifft beispielsweise zu, wenn der Förderer tangential am Schneidverdichter angeordnet ist.

Um sicherzustellen, dass keine zu große Stopfwirkung auftritt, kann vorteilhafterweise vorgesehen sein, dass der Abstand bzw. die Versetzung der Längsachse zur Radialen größer als oder gleich groß wie der halbe Innendurchmesser des Gehäuses des Förderers bzw. der Schecke ist.

Weiters kann es in diesem Sinne vorteilhaft sein, den Abstand bzw. die Versetzung der Längsachse zur Radialen größer gleich 5 oder 7 %, noch vorteilhafter größer gleich 20 %, des Radius des Aufnahmebehälters zu bemessen. Bei Förderern mit einem verlängerten Einzugsbereich bzw. einer Nutenbuchse oder erweiterten Tasche kann es vorteilhaft sein, wenn dieser Abstand bzw. diese Versetzung größer als oder gleich groß wie der Radius des Aufnahmebehälters ist. Insbesondere trifft dies für Fälle zu, bei denen der Förderer tangential an den Aufnahmebehälter angeschlossen ist bzw. tangential zum Querschnitt des Behälters verläuft.

Die äußersten Gänge der Schnecke ragen vorteilhafterweise nicht in den Behälter hinein.

Dabei ist insbesondere vorteilhaft, wenn die Längsachse des Förderers bzw. der Schnecke bzw. die Längsachse der der Einzugsöffnung nächstliegenden Schnecke oder die Innenwandung des Gehäuses oder die Umhüllende der Schecke tangential zur Innenseite der Seitenwand des Behälters verläuft, wobei vorzugsweise die Schnecke an ihrer Stirnseite mit einem Antrieb verbunden ist und an ihrem gegenüberliegenden Stirnende zu einer am Stirnende des Gehäuses angeordneten Austrittsöffnung, insbesondere einem Extruderkopf, fördert.

Es ist vorteilhaft, wenn vorgesehen ist, dass die Öffnung unmittelbar und direkt und ohne längere Beabstandung oder Übergabestrecke, z.B. einer Förderschnecke, mit der Einzugsöffnung verbunden ist. Damit ist eine effektive und schonende Materialübergabe möglich.

Bei einer weiteren besonders vorteilhaften Ausgestaltung ist vorgesehen, dass der Aufnahmebehälter im wesentlichen zylindrisch mit einer ebenen Bodenfläche und einer dazu vertikal ausgerichteten zylindermantelförmigen Seitenwand ist. Konstruktiv einfach ist es weiters, wenn die Drehachse mit der zentralen Mittelachse des Aufnahmebehälters zusammenfällt. Bei einer weiteren vorteilhaften Ausgestaltung ist vorgesehen, dass die Drehachse oder die zentrale Mittelachse des Behälters vertikal und/oder normal zur Bodenfläche ausgerichtet sind. Durch diese besonderen Geometrien wird das Einzugsverhalten bei einer konstruktiv stabilen und einfach aufgebauten Vorrichtung optimiert.

In diesem Zusammenhang ist es auch vorteilhaft, vorzusehen, dass das Misch- und/oder Zerkleinerungswerkzeug, oder, falls mehrere übereinander angeordnete Misch- und/oder Zerkleinerungswerkzeuge vorgesehen sind, das unterste, bodennächste Misch- und/oder Zerkleinerungswerkzeug, sowie die Öffnung in geringem Abstand zur Bodenfläche, insbesondere im Bereich des untersten Viertels der Höhe des Aufnahmebehälters angeordnet sind. Der Abstand wird dabei definiert und gemessen von der untersten Kante der Öffnung bzw. der Einzugsöffnung bis zum Behälterboden im Randbereich des Behälters. Da die Eckkante meist gerundet ausgebildet ist, wird der Abstand von der untersten Kante der Öffnung entlang der gedachten Verlängerungen der Seitenwand nach unten bis zur gedachten Verlängerung des Behälterbodens nach außen gemessen. Gut geeignete Abstände sind 10 bis 400 mm.

Weiters ist es für die Bearbeitung vorteilhaft, wenn die radial äußersten Kanten der Misch-und/oder Zerkleinerungswerkzeuge bis dicht an die Seitenwand heranreichen.

Der Behälter muss nicht unbedingt eine kreiszylindrische Form aufweisen, wenngleich diese Form aus praktischen und fertigungstechnischen Gründen vorteilhaft ist. Von der Kreiszylinderform abweichende Behälterformen, etwa kegelstumpfförmige Behälter oder zylindrische Behälter mit elliptischem oder ovalem Grundriss, müssen auf einen kreiszylindrischen Behälter gleichen Fassungsvolumens umgerechnet werden, unter der Annahme, dass die Höhe dieses fiktiven Behälters gleich dessen Durchmesser ist. Behälterhöhen, die hierbei die sich einstellende Mischtrombe (unter Berücksichtigung des Sicherheitsabstandes) wesentlich übersteigen, bleiben unberücksichtigt, da diese übermäßige Behälterhöhe nicht genutzt wird und daher auf die Materialverarbeitung keinen Einfluss mehr hat.

Bei den in den nachfolgenden Figuren beschriebenen Beispielen sind durchwegs Förderer mit einer einzigen Schnecke, beispielsweise Einwellen- bzw. Einschneckenextruder, dargestellt. Alternativ ist jedoch auch die Vorsehung von Förderern mit mehr als einer Schnecke, beispielsweise Doppel- oder Mehrwellenförderer oder -extruder, insbesondere mit mehreren identischen Schnecken, die zumindest gleiche Durchmesser d aufweisen, möglich.

Weitere Vorteile und Ausgestaltungen der Erfindung ergeben sich aus der Beschreibung und den beiliegenden Zeichnungen. Die Erfindung ist anhand von Ausführungsbeispielen in den Zeichnungen schematisch dargestellt und wird im Folgenden unter Bezugnahme auf die Zeichnungen beispielsweise beschrieben.
Fig. 1 zeigt eine erste Ausführungsform einer Schneckengeometrie.
Fig. 2 zeigt eine weitere Ausführungsform einer erfindungsgemäßen Schneckengeometrie.

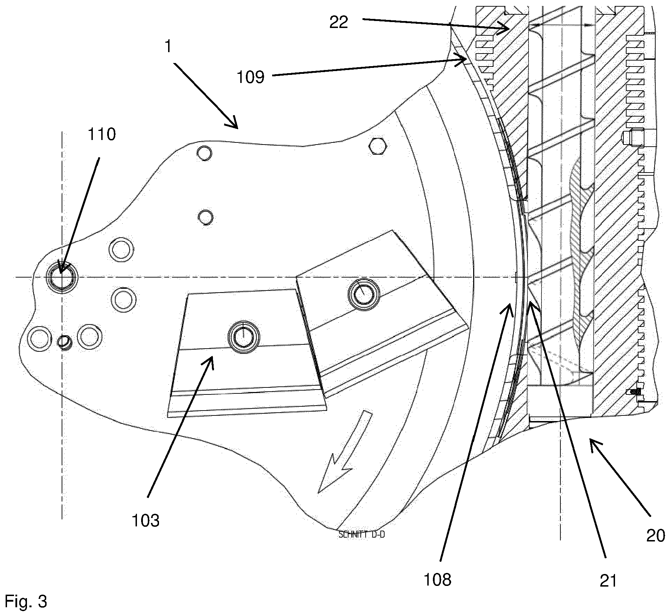

Fig. 3 zeigt die Anbindung eines erfindungsgemäßen Extruders an einen Behälter.
Fig. 4a und 4b zeigen eine erfindungsgemäße Schälschnecke.
Fig. 5a und 5b zeigen eine Standardschnecke zum Vergleich.
Fig. 6 und 7 zeigen Ergebnisse von Vergleichsversuchen.

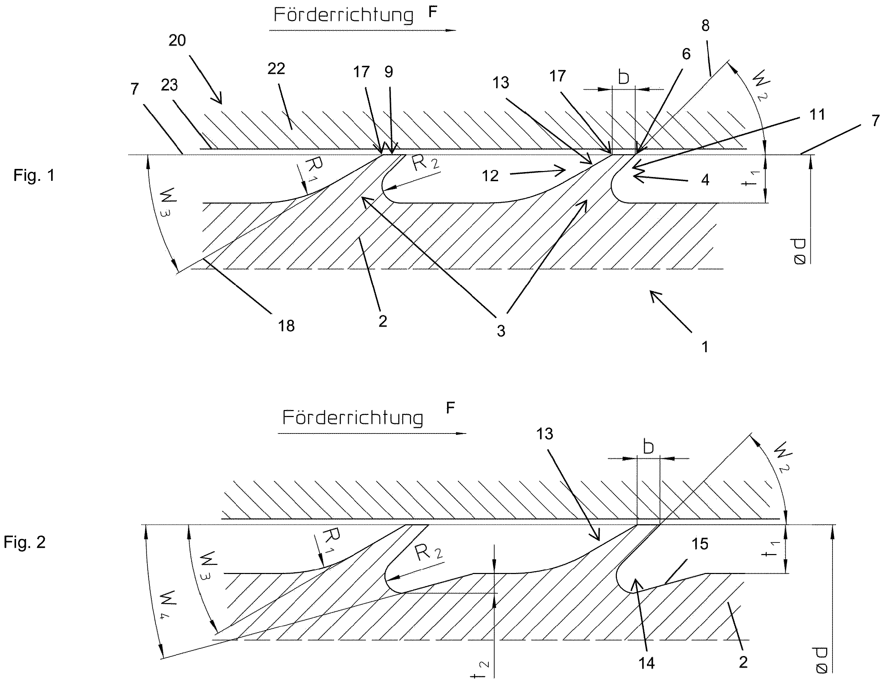

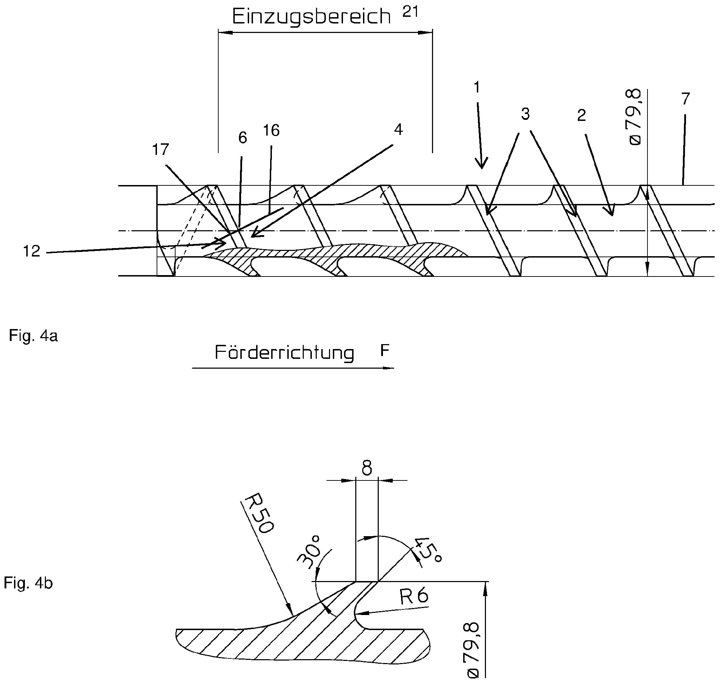

In Fig. 1 und 2 ist eine erste Ausführungsform und eine zweite Ausführungsform einer erfindungsgemäßen Schneckengeometrie in Detailansicht dargestellt. Es handelt sich hierbei jeweils um Normalschnitte durch den Steg 3, d.h. im rechten Winkel zur vorderen und hinteren Stegkante 6, 17, wodurch die Normalschnittebene 16 gebildet wird, die in den Fig. 1 und 2 in der Bildebene verläuft. Der Verlauf dieser Normalschnittebene 16 ist auch in Fig. 4a dargestellt.

Erkennbar ist eine Schnecke 1, die im Inneren eines angedeuteten Extruders bzw. Förderers 20 achsrotierbar angeordnet ist. Hierbei kann es sich um eine komprimierende oder agglomerierende Schnecke handeln. Die Schnecke 1 besitzt einen Kern 2 sowie einen wendelförmig um diesen Kern 2 herum laufenden Steg 3. Der Steg 3 besitzt eine in Förderrichtung F weisende vordere aktive Förderflanke 4 und eine in die gegensätzliche Richtung weisende hintere passive Förderflanke 12.

Im radial äußersten Bereich liegen die äußeren Stegflächen 9 mit einer in Förderrichtung F weisenden vordersten Kante 6 und einer gegenüberliegenden hintersten Kante 17. Die äußere Stegfläche 9 ist in Umfangsrichtung der Schnecke gekrümmt, in der Normalschnittebene 16 aber gerade und nicht gekrümmt ausgebildet und verläuft parallel zur Wandung 23 des Gehäuses 22 des Extruders 20.

Durch die äußeren Stegflächen 9 bzw. die vordersten Kanten 16 wird eine Umhüllende 7 der Schnecke 1 gebildet, wobei die Umhüllende 7 bei vorliegenden Ausführungsbeispielen ebenfalls parallel zur Wandung 23 ausgerichtet ist. Dementsprechend ist die Umhüllende 7 sowie auch die äußeren Stegflächen 9 des Stegs 3 parallel zur zentralen Längsachse der Schnecke 1 ausgerichtet.

Die Hinterschneidung der aktiven Förderflanke 4 ist durch einen Hinterschneidungswinkel w2 definiert. Dieser Hinterschneidungswinkel w2 wird gemessen in einem auf der in Förderrichtung F vordersten Kante 6 des Stegs 3 liegenden Scheitel. Der Winkel w2 wird dabei gebildet zwischen der Umhüllenden 7 und der Tangente 8, die durch den Scheitel an die aktive Förderflanke 4 gelegt wird, und zwar in der Normalschnittebene 16. Im vorliegenden Fall ergibt sich der gleiche Hinterschneidungswinkel w2 auch zwischen der Tangente 8 und einer Parallelen zur zentralen Längsachse, bei konischen Schnecken würden sich hier allerdings Unterschiede ergeben. Im Ausführungsbeispiel gemäß Fig. 1 ist der Hinterschneidungswinkel w2 zirka 45°.

Die aktive Förderflanke 4 besitzt in einem radial äußeren Abschnitt 11 eine planebene Ausgestaltung bzw. ist dieser Bereich in der Normalschnittebene 16 nicht gekrümmt ausgebildet. Dieser Abschnitt 11 erstreckt sich bis etwa zur Hälfte der aktiven Förderflanke 4 und geht dann in einem gekrümmten Bereich in den Kern 2 über. Diese Krümmung R2 ist kreisbogenförmig und erstreckt sich über einen Bereich von etwas weniger als 2 rad.

Bei der Ausführungsform gemäß Fig. 1 ist der Durchmesser des Kerns 2 im Wesentlichen konstant, zumindest im dargestellten Abschnitt der Schnecke 1. Die Einzugstiefe 1 gemessen zwischen der Umhüllenden 7 und dem Kern 2 im Bereich zwischen zwei benachbarten Stegen 3 ist ungefähr 25 % des Schneckendurchmessers d in diesem Bereich. Wie einleitend erwähnt, ist die Einzugstiefe t1 in Kombination mit der Hinterschneidung besonderes vorteilhaft für das Einzugsverhalten.

Die passive Förderflanke 12 schließt sich stromabwärts der hintersten Kante 17 entgegen der Förderrichtung F an und besitzt einen radial äußeren Abschnitt 13, der planeben bzw. in der Normalschnittebene 16 nicht gekrümmt ausgebildet ist. Dieser Abschnitt 13 erstreckt sich bei der Ausführungsform gemäß Fig. 1 über etwa 60 % der Länge der passiven Förderflanke 12 und geht dann über eine kreisbogenförmige Krümmung R1 in den Bereich des Kerns 2 über. Die passive Förderflanke 12 ist dementsprechend geneigt, und zwar in einem Flankenwinkel w3 gemessen im Scheitel, der auf der in Förderrichtung F hintersten Kante 17 des Steges 3 liegt. Der Flankenwinkel w3 wird dabei zwischen der Umhüllenden 7 und einer durch den Scheitelpunkt geführten Tangente 18 an die passive Förderflanke 12 gebildet, und zwar in der Normalschnittebene 16. In der Ausführungsform gemäß Fig. 1 beträgt der Winkel w3 rund 30°:
Im Ausführungsbeispiel gemäß Fig. 2 ist die Form bzw. Geometrie der Stege 3 ähnlich wie in Fig. 1, und zwar sowohl in der Ausgestaltung der Hinterschneidung als auch in der Form der Stege 3. Allerdings ist im Unterschied zur Fig. 1 in dem Bereich, in dem die aktive Förderflanke 4 in den Kern 2 bzw. Schneckengrund übergeht, eine zusätzliche Vertiefung 14 ausgebildet. Bei dieser ist der Durchmesser des Kerns 2 etwas geringer als in den benachbarten Bereichen des Kerns 2, wodurch eine Zusatztiefe t2 gegenüber der Einzugstiefe t1 definiert wird. Im Ausführungsbeispiel gemäß Fig. 2 ist diese Zusatztiefe t2 rund 20 % der Einzugstiefe t1. Dieser derart vertiefte Schneckengrund besitzt einen in der Normalschnittebene 16 geraden Kernabschnitt 15, der in einem Winkel w4 von rund 20° zur Umhüllenden 7 bzw. zum übrigen Bereich des Kerns 2 geneigt ist. Diese Vertiefung 14 ergibt gemeinsam mit der Hinterschneidung ein ebenfalls vorteilhaftes Einzugsverhalten.

### Beispiele:

Die nachfolgenden Vergleichsversuche wurden auf einer Schneidverdichter/Extruder-Kombination Intarema 1108 TE durchgeführt:

| | Vorrichtung Typ | Bemerkung |
|---|---|---|
| Verfahrenseinheit | Intarema 1108 TE | Durchmesser Behälter 1100 mm; Durchmesser Extruder 80 mm |
| Schmelze Filter | RTF 4/34 | Filtration 12/64 |
| Granulierung | HG 154 D | Lochplatte 20x3 |

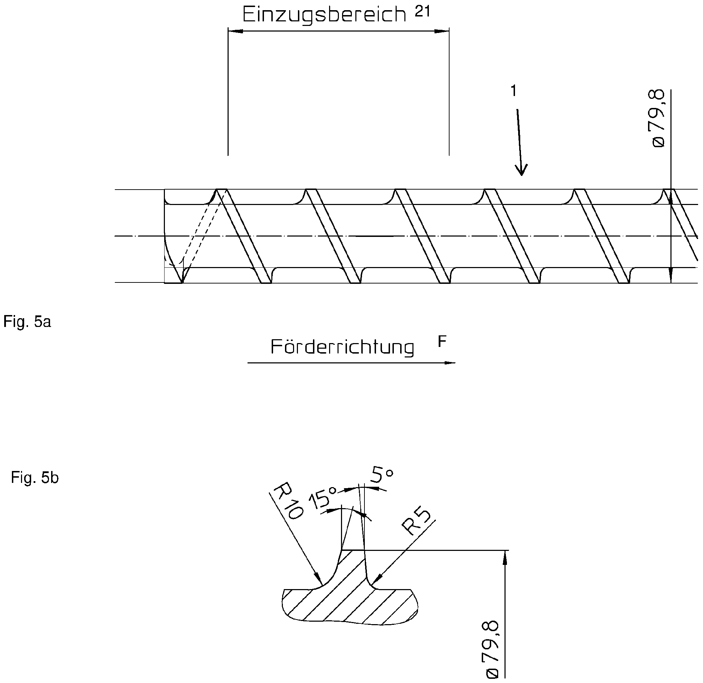

Alle Verfahrensparameter sowie auch die Eingangsmaterialien wurden konstant gehalten, es wurde lediglich die Geometrie der Schnecke variiert. Als Vergleichsschnecke wurde eine standardgemäße Extruderschnecke ohne Hinterschneidung mit einem Winkel w2 = 95° gewählt ("Standardschnecke"). Als erfindungsgemäße Schnecke wurde eine - in den anderen Aspekten gleichartige - Extruderschnecke mit Hinterschneidung mit einem Hinterschneidungswinkel w2 = 45° gewählt ("Schälschnecke"). Die Spezifikationen und relevanten Geometrien sind in Fig. 5a, 5b für die Standardschnecke bzw. in Fig. 4a, 4b für die Schälschnecke detailliert dargestellt:

| | Standardschnecke | Schälschnecke |
|---|---|---|
| Durchmesser d [mm] | 79.8 | 79,8 |
| Steigung S [mm] | 80 | 80 |
| Stegbreite b [mm] | 8 | 8 |
| Einzugs- bzw. Schneckentiefe t1 [mm] | 16 | 16 |

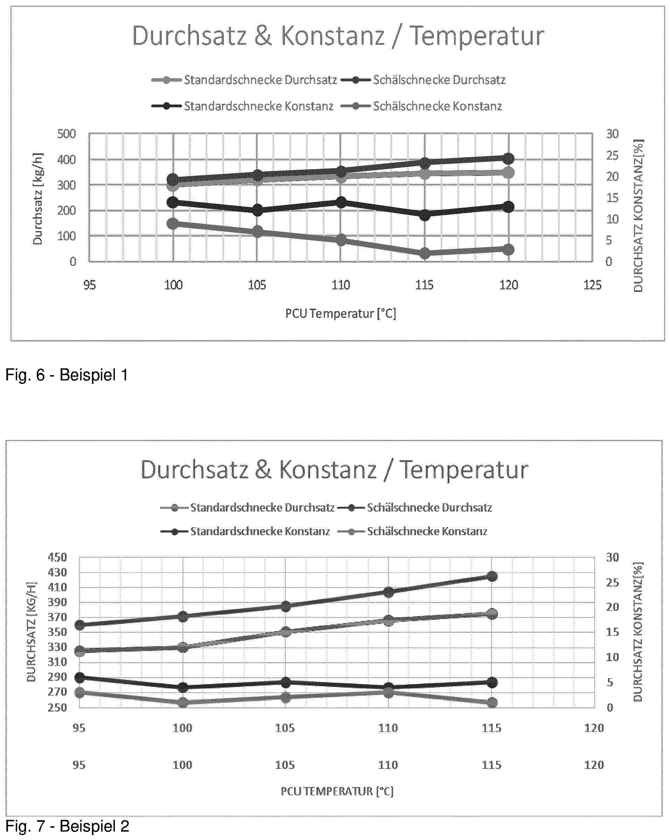

Bewertet wurde der jeweilige absolute Durchsatz und die Durchsatzkonstanz, also das Verhalten des Durchsatzes über längere Zeiträume. Bewertet wurde auch der Einfluss der steigenden Materialdichte, die durch die Temperatur in der PCU dargestellt wird. Die Ergebnisse sind in Fig. 6 und 7 zusammenfassend dargestellt.

### Beispiel 1:

### Versuchsmaterial 1:

| | |
|---|---|
| Polymer | expandiertes Polystyrol EPS |
| Materialform | Mahlgut |
| Schüttdichte | 10-15 g/l |
| Feuchtigkeit | trocken |
| Verschmutzung | sauber, Produktionsabfälle |
| Bemerkungen | konstante Schüttdichte |

| Standardschnecke (w2=95°) | | | Schälschnecke (w2=45°) | | |
|---|---|---|---|---|---|
| PCU Temperatur [°C] | Durchsatz [kg/h] | Durchsatzkonstanz [%] | PCU Temperatur [°C] | Durchsatz [kg/h] | Durchsatzkonstanz [%] |
| 100 | 300 | 14 | 100 | 320 | 9 |
| 105 | 320 | 12 | 105 | 341 | 7 |
| 110 | 333 | 14 | 110 | 354 | 5 |
| 115 | 346 | 11 | 115 | 387 | 2 |
| 120 | 350 | 13 | 120 | 405 | 3 |

In Fig. 6 sind die Ergebnisse, insbesondere zu Durchsatz und Konstanz, dargestellt.

### Beispiel 2:

### Versuchsmaterial 2:

| | |
|---|---|
| Polymer | Polypropylen PP |
| Materialform | Schaumpolymer |
| Schüttdichte | 130-140g/l |
| Verschmutzung | sauber |
| Bemerkungen | zerkleinert mit einer Mühle mit einem Siebeinsatz mit 80mm Löchern |

| Standardschnecke (w2=95°) | | | Schälschnecke (w2=45°) | | |
|---|---|---|---|---|---|
| PCU Temperatur [°C] | Durchsatz [kg/h] | Durchsatzkonstanz [%] | PCU Temperatur [°C] | Durchsatz [kg/h] | Durchsatzkonstanz [%] |
| 95 | 325 | 6 | 95 | 360 | 3 |
| 100 | 330 | 4 | 100 | 371 | 1 |
| 105 | 351 | 5 | 105 | 385 | 2 |
| 110 | 366 | 4 | 110 | 404 | 3 |
| 115 | 375 | 5 | 115 | 425 | 1 |

In Fig. 7 sind die Ergebnisse, insbesondere zu Durchsatz und Konstanz, dargestellt.

Es ist ersichtlich, dass mit der erfindungsgemäß hinterschnittenen Schnecke jeweils höhere Durchsätze bei gleichzeitig verbesserter Durchsatzkonstanz erzielt wurden.

## Patentansprüche

1. Schnecke (1) für einen Extruder oder Förderer (20), insbesondere Extruderschnecke, Förderschnecke oder Dosierschnecke für Polymere, mit einem wendelförmig um einen Kern (2) umlaufenden Steg (3), wobei der Steg (3) zumindest in einem Abschnitt der Schnecke (1) an seiner aktiven Förderflanke (4) in Förderrichtung (F) hinterschnitten ausgebildet ist, wobei die Schnecke (1) zumindest in einem Abschnitt der Schnecke (1), eine Einzugstiefe (t1), gemessen zwischen der Umhüllenden (7) und dem Kern (2) im Bereich zwischen zwei benachbarten Stegen (3), aufweist, wobei für die Einzugstiefe (t1) gilt: 0,03*d ≤ t1 ≤ 0,35*d, wobei d der äußere Schneckendurchmesser in diesem Bereich ist,
**dadurch gekennzeichnet, dass**
der Kern (2) zumindest in einem Abschnitt der Schnecke (1), im Bereich, in dem die aktive Förderflanke (4) in den Kern (2) bzw. Schneckengrund übergeht, eine zusätzliche Vertiefung (14) aufweist, bei der der Kerndurchmesser geringer als in den benachbarten Bereichen ist, wobei für die Zusatztiefe (t2) der Vertiefung (14) gilt: 0*t1 < t2 ≤ t1,
und dass ein der Vertiefung (14) benachbarter, in der Normalschnittebene (16) gerader Kernabschnitt (15) ausgebildet ist, der in einem Winkel (w4) im Bereich von 0° < w4 ≤ 45° zu einer Umhüllenden (7) der Schnecke (1) geneigt ist.

2. Schnecke nach Anspruch 1, **dadurch gekennzeichnet, dass** die Hinterschneidung mit einem Hinterschneidungswinkel (w2) ausgebildet ist, gemessen in einem Scheitel auf der in Förderrichtung (F) vordersten Kante (6) des Stegs (3), in einer Normalschnittebene (16) normal zum Steg (3), zwischen einer Umhüllenden (7) der Schnecke (1) und einer Tangente (8) an die aktive Förderflanke (4), wobei der Hinterschneidungswinkel (w2) im Bereich von 30° ≤ w2 ≤ 90° liegt.

3. Schnecke nach einem der Ansprüche 1 bis 2, **dadurch gekennzeichnet, dass** der Hinterschneidungswinkel (w2) im Bereich von 30° ≤ w2 ≤ 65°, insbesondere im Bereich von 40° ≤ w2 ≤ 50°, vorzugsweise bei ca. 45°, liegt.

4. Schnecke nach einem der Ansprüche 1 bis 3, **dadurch gekennzeichnet, dass** die aktive Förderflanke (4) zumindest in einem Abschnitt der Schnecke (1), in einem radial äußeren Abschnitt (11), insbesondere bis maximal 50 % der aktiven Förderflanke (4), planeben bzw. in der Normalschnittebene (16) ungekrümmt ausgebildet ist.

5. Schnecke nach einem der Ansprüche 1 bis 4, **dadurch gekennzeichnet, dass** für die Einzugstiefe (t1) gilt: 0,125*d ≤ t1 ≤ 0,35*d, wobei d der äußere Schneckendurchmesser in diesem Bereich ist.

6. Schnecke nach einem der Ansprüche 1 bis 5, **dadurch gekennzeichnet, dass** die aktive Förderflanke (4) zumindest in einem Abschnitt der Schnecke (1), im Bereich, in dem die aktive Förderflanke (4) in den Kern (2) übergeht, eine, insbesondere kreisbogenförmige, Krümmung (R2) aufweist, die sich zumindest über einen Bereich von > 1 rad erstreckt.

7. Schnecke nach einem der Ansprüche 1 bis 6, **dadurch gekennzeichnet, dass** die äußere Stegfläche (9) des Stegs (3) zumindest in einem Abschnitt der Schnecke (1), im Bereich anschließend an die vorderste Kante (6) des Stegs (3), vorzugsweise vollständig bis zur hintersten Kante (17), in der Normalschnittebene (16) ungekrümmt ausgebildet ist.

8. Schnecke nach einem der Ansprüche 1 bis 7, **dadurch gekennzeichnet, dass** die äußere Stegfläche (9) zumindest in einem Abschnitt der Schnecke (1), parallel zur Umhüllenden (7) und/oder zur Wandung (23) des Gehäuses (22) eines Extruders (20) ausgerichtet ist.

9. Schnecke nach einem der Ansprüche 1 bis 8, **dadurch gekennzeichnet, dass** die an die äußere Stegfläche (9) anschließende passive Förderflanke (12) des Stegs (3) zumindest in einem Abschnitt der Schnecke (1), in einem radial äußeren, der äußeren Stegfläche (9) benachbarten Abschnitt (13), insbesondere bis maximal 70 % der passiven Förderflanke (12), planeben bzw. in der Normalschnittebene (16) ungekrümmt ausgebildet ist.

10. Schnecke nach einem der Ansprüche 1 bis 9, **dadurch gekennzeichnet, dass** die passive Förderflanke (12) zumindest in einem Abschnitt der Schnecke (1), in einem Flankenwinkel (w3) im Bereich von 30° ≤ w3 ≤ 90° geneigt ist, gemessen in einem Scheitel auf der in Förderrichtung (F) hintersten Kante (17) des Stegs (3), in einer Normalschnittebene (16) normal zum Steg (3), zwischen der Umhüllenden (7) der Schnecke (1) und einer Tangente (18) an die passive Förderflanke (12).

11. Schnecke nach einem der Ansprüche 1 bis 10, **dadurch gekennzeichnet, dass** die Schnecke (1) eingängig oder mehrgängig mit einer Ganganzahl im Bereich von 2 bis 20 ist.

12. Schnecke nach einem der Ansprüche 1 bis 11, **dadurch gekennzeichnet, dass** für die Gangsteigung (S) der Schnecke (1) gilt: 0,1*d ≤ S ≤ 5*d, wobei d der äußere Schneckendurchmesser ist.

13. Schnecke nach einem der Ansprüche 1 bis 12, **dadurch gekennzeichnet, dass** für die Stegbreite (b) bzw. die Breite der äußeren Stegfläche (9) gilt: 0*S ≤ b ≤ 0,5*S, wobei S die Gangsteigung (S) der Schnecke (1) ist.

14. Schnecke nach einem der Ansprüche 1 bis 13, **dadurch gekennzeichnet, dass** die Schnecke (1) nur im zur Förderrichtung (F) distalen Bereich bzw. im Einzugsbereich eines Extruders oder Förderers (20), gemäß einem der Ansprüche 1 bis 13 ausgebildet ist, und im übrigen Bereich der Steg (3) keine Hinterschneidung aufweist.

15. Extruder oder Förderer (20), insbesondere für Polymere, mit zumindest einer in einem Gehäuse (22) rotierbar angeordneten Schnecke (1) nach einem der Ansprüche 1 bis 14.

16. Extruder oder Förderer (20) nach Anspruch 15, **dadurch gekennzeichnet, dass** die Schnecke (1), insbesondere ausschließlich, im Bereich einer Öffnung (21) des Gehäuses (22), insbesondere im Bereich einer Einzugsöffnung bzw. Fütterungsöffnung (21) für das Material, gemäß einem der Ansprüche 1 bis 15 ausgebildet ist.

17. Vorrichtung zum Behandeln von Kunststoffen, insbesondere von thermoplastischem Abfallkunststoff zu Recyclingzwecken, mit einem Behälter und/oder Schneidverdichter (101) zur Vorbehandlung des zu verarbeitenden Materials, und einem daran, insbesondere tangential, angeschlossenen Extruder oder Förderer (20) gemäß Anspruch 15 oder 16 mit einer Schnecke gemäß einem der Ansprüche 1 bis 14.

18. Vorrichtung zum Behandeln von Kunststoffen, insbesondere von thermoplastischem Abfallkunststoff zu Recyclingzwecken, mit einem Behälter (101) für das zu verarbeitende Material, wobei im Behälter (101) zumindest ein um eine Drehachse (110) drehbares umlaufendes Misch- und/oder Zerkleinerungswerkzeug (103) zur Mischung, Erwärmung und gegebenenfalls Zerkleinerung des Kunststoffmaterials angeordnet ist,
wobei in einer Seitenwand (109) des Behälters (101) im Bereich der Höhe des oder des untersten, bodennächsten Misch- und/oder Zerkleinerungswerkzeugs (103) eine Behälteröffnung (108) ausgebildet ist, durch die das vorbehandelte Kunststoffmaterial aus dem Inneren des Behälters (101) ausbringbar ist,
wobei zumindest ein Extruder oder Förderer (20) gemäß Anspruch 15 oder 16 zur Aufnahme des im Behälter (101) vorbehandelten Materials vorgesehen ist,
wobei das Gehäuse (22) des Extruders (20) eine an seiner Stirnseite (107) oder in seiner Mantelwand liegende Einzugsöffnung (21) für das von der Schnecke (1) zu erfassende Material aufweist, und die Einzugsöffnung (21) mit der Behälteröffnung (108) in Verbindung steht.

19. Vorrichtung nach Anspruch 17 oder 18, **dadurch gekennzeichnet, dass** im Bereich vor der Behälteröffnung (108) bzw. im Bereich vor der Einzugsöffnung bzw. Fütterungsöffnung (21) des Förderers oder Extruders (20) die Drehrichtung der Misch-und/oder Zerkleinerungswerkzeugs (103) im wesentlichen entgegen der bzw. gegensinnig zur Förderrichtung (F) des Extruders (20) verläuft.

## Claims

1. A screw (1) for an extruder or conveyor (20), in particular extruder screw, conveying screw or dosing screw for polymers, having a web (3) running helically around a core (2), wherein the web (3) at least in a section of the screw (1) is formed undercut on its active conveying flank (4) in a conveying direction (F), wherein the screw (1), at least in a section of the screw (1), has an intake depth (t1), measured between the envelope (7) and the core (2) in the region between two adjacent webs (3), wherein for the intake depth (1) applies: 0.03*d ≤ t1 ≤ 0.35*d, wherein d is the outer screw diameter in this region,
**characterised in that**
the core (2), at least in a section of the screw (1), in the region in which the active conveying flank (4) merges into the core (2) or screw base, has an additional recess (14) in which the core diameter is smaller than in the adjacent regions, wherein for the additional depth (t2) of the recess (14) applies: 0*t1 ≤ t2 ≤ t1,
and **in that** a core section (15) is formed adjacent to the recess (14), straight in the normal cutting plane (16), which is inclined at an angle (w4) in the range of 0° ≤ w4 ≤ 45° to the envelope (7) of the screw (1).

2. The screw according to claim 1, **characterised in that** the undercut is formed with an undercut angle (w2), measured in a vertex on the foremost edge (6) of the web (3) in the conveying direction (F), in a normal cutting plane (16) normal to the web (3), between an envelope (7) of the screw (1) and a tangent (8) to the active conveying flank (4), wherein the undercut angle (w2) is in the range of 30° ≤ w2 ≤ 90°.

3. The screw according to any one of claims 1 to 2, **characterised in that** the undercut angle (w2) is in the range of 30° ≤ w2 ≤ 65°, in particular in the range of 40° ≤ w2 ≤ 50°, preferably at about 45°.

4. The screw according to any one of claims 1 to 3, **characterised in that** the active conveying flank (4), at least in a section of the screw (1), in a radially outer section (11), in particular up to 50 % of the active conveying flank (4), is formed plane or uncurved in the normal cutting plane (16).

5. The screw according to any one of claims 1 to 4, **characterised in that** for the intake depth (1) applies: 0.125*d ≤ t1 ≤ 0.35*d, wherein d is the outer screw diameter in this region.

6. The screw according to any one of claims 1 to 5, **characterised in that** the active conveying flank (4), at least in a section of the screw (1), in the region in which the active conveying flank (4) merges into the core (2), comprises a curvature (R2), in particular in the shape of an arc, which extends at least over a range of > 1 rad.

7. The screw according to any one of claims 1 to 6, **characterised in that** the outer web surface (9) of the web (3), at least in a section of the screw (1), in the region adjacent to the foremost edge (6) of the web (3), preferably completely up to the rearmost edge (17), is formed uncurved in the normal cutting plane (16).

8. The screw according to any one of claims 1 to 7, **characterised in that** the outer web surface (9), at least in a section of the screw (1), is oriented parallel to the envelope (7) and/or to the wall (23) of the housing (22) of an extruder (20).

9. The screw according to any one of claims 1 to 8, **characterised in that** the passive conveying flank (12) of the web (3) adjoining the outer web surface (9) is formed plane or uncurved in the normal cutting plane (16), at least in a section of the screw (1), in a radially outer section (13) adjacent to the outer web surface (9), in particular up to a maximum of 70 % of the passive conveying flank (12).

10. The screw according to any one of claims 1 to 9, **characterised in that** the passive conveying flank (12), at least in a section of the screw (1), is inclined at a flank angle (w3) in the range of 30° ≤ w3 ≤ 90°, measured in a vertex on the rearmost edge (17) of the web (3) in the conveying direction (F), in a normal cutting plane (16) normal to the web (3), between the envelope (7) of the screw (1) and a tangent (18) to the passive conveying flank (12).

11. The screw according to any one of claims 1 to 10, **characterised in that** the screw (1) is single-start or multi-start having a number of flights in the range of 2 to 20.

12. The screw according to any one of claims 1 to 11, **characterised in that** for the pitch (S) of the screw (1) applies: 0.1*d ≤ S ≤ 5*d, wherein d is the outer screw diameter.

13. The screw according to any one of claims 1 to 12, **characterised in that** for the web width (b) or the width of the outer web surface (9) applies: 0*S ≤ b ≤ 0.5*5, wherein 5 is the pitch (S) of the screw (1).

14. The screw according to any one of claims 1 to 13, **characterised in that** the screw (1), only in the region distal to the conveying direction (F) or in the intake area of an extruder or conveyor (20), is formed according to any one of claims 1 to 13, and in the remaining region the web (3) has no undercut.

15. An extruder or conveyor (20), in particular for polymers, having at least one screw (1) according to any one of claims 1 to 14, rotatably arranged in a housing (22).

16. The extruder or conveyor (20) according to claim 15, **characterised in that** the screw (1) is formed, in particular exclusively, in a region of an opening (21) of the housing (22), in particular in a region of an intake opening or feeding opening (21) for the material, according to any one of claims 1 to 15.

17. A device for the treatment of plastics, in particular of thermoplastic waste plastic for recycling purposes, having a container and/or cutting compressor (101) for pretreating the material to be processed, and an extruder or conveyor (20) connected thereto, in particular tangentially, according to claim 15 or 16, having a screw according to any one of claims 1 to 14.

18. A device for the treatment of plastics, in particular of thermoplastic waste plastic for recycling purposes, having a container (101) for the material to be processed, wherein at least one rotating mixing and/or comminuting tool (103) rotatable about an axis of rotation (110) is arranged in the container (101) for mixing, heating and, if necessary, comminuting the plastic material,
wherein a container opening (108) is formed in a side wall (109) of the container (101) in the region of the height of the or the lowermost mixing and/or comminution tool (103), closest to the bottom, through which the pretreated plastic material can be discharged from the interior of the container (101),
wherein at least an extruder or conveyor (20) according to claim 15 or 16 is provided for receiving the material pretreated in the container (101),
wherein the housing (22) of the extruder (20) has an intake opening (21), located on its end face (107) or in its sheath wall, for the material to be gripped by the screw (1), and the intake opening (21) is in communication with the container opening (108).

19. The device according to claim 17 or 18, **characterised in that** in the region before the container opening (108) or in the region before the intake opening or feeding opening (21) of the conveyor or extruder (20) the direction of rotation of the mixing and/or comminuting tool (103) runs essentially counter to or in the opposite direction to the conveying direction (F) of the extruder (20).

## Revendications

1. Vis sans fin (1) pour une extrudeuse ou un transporteur (20), en particulier une vis sans fin d'extrudeuse, une vis sans fin de transporteur ou une vis sans fin de dosage pour des polymères, pourvue d'une nervure (3) en forme d'hélice entourant un noyau (2), dans laquelle la nervure (3) est formée en contre-dépouille au moins dans une section de la vis sans fin (1) sur son flanc de transport actif (4) dans la direction de transport (F), dans laquelle la vis sans fin (1) présente au moins dans une section de la vis sans fin (1), une profondeur d'insertion (t1), mesurée entre l'enveloppe (7) et le noyau (2) dans la zone située entre deux nervures (3) adjacentes, dans laquelle pour la profondeur d'insertion (t1) s'applique : 0,03*d ≤ t1 ≤ 0,35*d, dans laquelle d représente le diamètre extérieur de la vis sans fin dans ladite plage,
**caractérisée en ce que**
le noyau (2) présente au moins dans une section de la vis sans fin (1), dans la zone, dans laquelle le flanc de transport actif (4) passe dans le noyau (2) ou le fond de la vis sans fin, une profondeur (14) supplémentaire, pour laquelle le diamètre de noyau est inférieur à celui dans les zones adjacentes, dans laquelle pour la profondeur supplémentaire (t2) la profondeur (14) vaut : 0*t1 ≤ t2 ≤ t1,
et **en ce qu'**une section de noyau (15) plus adjacente à la profondeur (14) est formée de manière plus linéaire dans le plan de coupe normal (16), qui est incliné d'un angle (w4) dans la plage de 0 ° ≤ w4 ≤ 45 ° par rapport à une enveloppe (7) de la vis sans fin (1).

2. Vis sans fin selon la revendication 1, **caractérisée en ce que** la contre-dépouille est formée avec un angle de contre-dépouille (w2), mesuré à un sommet sur le bord (6) le plus avant dans la direction de transport (F) de la nervure (3), dans un plan de coupe normal (16) perpendiculaire à la nervure (3), entre une enveloppe (7) de la vis sans fin (1) et une tangente (8) au niveau du flanc de transport actif (4), dans laquelle l'angle de contre-dépouille (w2) se situe dans la plage de 30 ° ≤ w2 ≤ 90 °.

3. Vis sans fin selon l'une quelconque des revendications 1 à 2, **caractérisée en ce que** l'angle de contre-dépouille (w2) se situe dans la plage de 30° ≤ w2 ≤ 65°, en particulier dans la plage de 40° ≤ w2 ≤ 50°, de préférence à environ 45 °.

4. Vis sans fin selon l'une quelconque des revendications 1 à 3, **caractérisée en ce que** le flanc de transport actif (4) est formé de manière plane ou non courbée dans le plan de coupe normal (16) au moins dans une section de la vis sans fin (1), dans une section (11) radialement extérieure, en particulier à maximum 50 % du flanc de transport actif (4).

5. Vis sans fin selon l'une quelconque des revendications 1 à 4, **caractérisée en ce que** pour une profondeur d'insertion (t1) s'applique : 0,125*d ≤ t1 ≤ 0,35*d, dans laquelle d représente le diamètre extérieur de la vis sans fin dans ladite plage.

6. Vis sans fin selon l'une quelconque des revendications 1 à 5, **caractérisée en ce que** le flanc de transport actif (4) présente au moins dans une section de la vis sans fin (1), dans la zone, dans laquelle le flanc de transport actif (4) passe dans le noyau (2), une courbure (R2), en particulier en forme d'arc de cercle, qui s'étend au moins sur une zone > 1 rad.

7. Vis sans fin selon l'une quelconque des revendications 1 à 6, **caractérisée en ce que** la surface de nervure extérieure (9) de la nervure (3) est formée de manière non courbée dans le plan de coupe normal (16) au moins dans une section de la vis sans fin (1), dans la zone adjacente au bord (6) le plus avant de la nervure (3), de préférence entièrement jusqu'au bord (17) le plus arrière.

8. Vis sans fin selon l'une quelconque des revendications 1 à 7, **caractérisée en ce que** la surface de nervure extérieure (9) est orientée au moins dans une section de la vis sans fin (1), parallèlement à l'enveloppe (7) et/ou à la paroi (23) du boîtier (22) d'une extrudeuse (20).

9. Vis sans fin selon l'une quelconque des revendications 1 à 8, **caractérisée en ce que** le flanc de transport passif (12) adjacent à la surface de nervure extérieure (9) de la nervure (3) est formée de manière plane ou non courbée dans le plan de coupe normal (16) au moins dans une section de la vis sans fin (1), dans une section radialement extérieure (13), adjacente à la surface de nervure extérieure (9), en particulier jusqu'à maximum 70 % du flanc de transport passif (12).

10. Vis sans fin selon l'une quelconque des revendications 1 à 9, **caractérisée en ce que** le flanc de transport passif (12) est incliné au moins dans une section de la vis sans fin (1), d'un angle de flanc (w3) dans la plage de 30 ° ≤ w3 ≤ 90 °, mesuré à un sommet sur le bord (17) le plus arrière dans la direction de transport (F), dans un plan de coupe normal (16) perpendiculaire à la nervure (3), entre l'enveloppe (7) de la vis sans fin (1) et une tangente (18) au niveau du flanc de transport passif (12).

11. Vis sans fin selon l'une quelconque des revendications 1 à 10, **caractérisée en ce que** la vis sans fin (1) est à une ou plusieurs vitesses avec un nombre de vitesses situé dans la plage allant de 2 à 20.

12. Vis sans fin selon l'une quelconque des revendications 1 à 11, **caractérisée en ce que** pour l'augmentation de vitesse (S) de la vis sans fin (1) s'applique : 0,1*d ≤ 5 ≤ 5*d, dans laquelle d représente le diamètre extérieur de la vis sans fin.

13. Vis sans fin selon l'une quelconque des revendications 1 à 12, **caractérisée en ce que** pour la largeur de la nervure (b) ou la largeur de la surface de nervure extérieure (9) s'applique : 0*S ≤ b ≤ 0,5*S, dans laquelle 5 représente l'augmentation de vitesse (S) de la vis sans fin (1).

14. Vis sans fin selon l'une quelconque des revendications 1 à 13, **caractérisée en ce que** la vis sans fin (1) est formée uniquement dans la zone distale à la direction de transport (F) ou dans la zone d'insertion d'une extrudeuse ou d'un transporteur (20), selon l'une quelconque des revendications 1 à 13, et ne présente aucune contre-dépouille dans la zone restante de la nervure (3).

15. Extrudeuse ou transporteur (20), en particulier pour des polymères, avec au moins une vis sans fin (1) agencée de manière rotative dans un boîtier (22) selon l'une quelconque des revendications 1 à 14.

16. Extrudeuse ou transporteur (20) selon la revendication 15, caractérisé(e) en ce que la vis sans fin (1) est formée, en particulier exclusivement dans la zone d'une ouverture (21) du boîtier (22), en particulier dans la zone d'une ouverture d'insertion ou d'une ouverture d'alimentation (21) pour le matériau, selon l'une quelconque des revendications 1 à 15.

17. Dispositif pour le traitement de matières plastiques, en particulier des déchets plastiques thermoplastiques à des fins de recyclage, avec un récipient et/ou un compresseur de coupe (101) pour le prétraitement du matériau à traiter, et une extrudeuse ou un transporteur (20) raccordé(e), en particulier de manière tangentielle, à celui-ci, selon la revendication 15 ou 16 avec une vis sans fin selon l'une quelconque des revendications 1 à 14.

18. Dispositif pour le traitement de matières plastiques, en particulier de déchets plastiques thermoplastiques à des fins de recyclage, avec un récipient (101) pour le matériau à traiter, dans lequel au moins un outil de mélange et/ou de broyage (103) tournant de manière rotative autour d'un axe de rotation (110) est disposé dans le récipient (101) pour le mélange, le chauffage et, le cas échéant, le broyage de la matière plastique,
dans lequel une ouverture de récipient (108) est formée dans une paroi latérale (109) du récipient (101) dans la zone de la hauteur de l'outil de mélange et/ou de broyage (103) le plus bas, le plus proche du sol, par laquelle la matière plastique prétraitée peut être sortie de l'intérieur du récipient (101),
dans lequel au moins une extrudeuse ou un transporteur (20) est prévu(e) selon la revendication 15 ou 16 pour la réception du matériau prétraité dans le récipient (101),
dans lequel le boîtier (22) de l'extrudeuse (20) présente une ouverture d'insertion (21) se trouvant au niveau de son côté frontal (107) ou dans sa paroi d'enveloppe pour le matériau à détecter par la vis sans fin (1), et l'ouverture d'insertion (21) est en contact avec l'ouverture de récipient (108).

19. Dispositif selon la revendication 17 ou 18, **caractérisé en ce que** dans la zone devant l'ouverture de récipient (108) ou dans la zone devant l'ouverture d'insertion ou l'ouverture d'alimentation (21) du transporteur ou de l'extrudeuse (20) le sens de rotation de l'outil de mélange et/ou de broyage (103) s'étend sensiblement en sens inverse ou en sens opposé à la direction de transport (F) de l'extrudeuse (20).
